# EUROPÄISCHE PATENTSCHRIFT

(11) **EP 2 184 518 B1**
(45) Veröffentlichungstag und Bekanntmachung des Hinweises auf die Patenterteilung: **24.09.2014**
(21) Anmeldenummer: 09175107.3
(22) Anmeldetag: 05.11.2009
(51) Int. Cl.: F16J 15/08, B22F 3/11, B22F 7/04, B22F 7/08, B32B 15/01, C22C 1/04, C22C 1/10, C22C 9/02, C22C 9/04, C22C 32/00, C23C 24/08, C23C 30/00

(54) **Flachdichtung sowie Verfahren zu ihrer Herstellung**
Gasket and method of its manufacture
Joint plat et son procédé de fabrication

(30) Priorität: 06.11.2008 DE 102008056150
(43) Veröffentlichungstag der Anmeldung: 12.05.2010
(73) Patentinhaber: ElringKlinger AG, 72581 Dettingen (DE); GKN Stromag Aktiengesellschaft, 59425 Unna (DE)
(72) Erfinder: Döhler, Sonja, 72813 St.Johann (DE); Göb, Oliver, Dr., 71672 Marbach (DE); Kullen, Wilhelm, 72584 Hülben (DE); Mattheis, Hansjürgen, 89143 Blaubeuren (DE); Hojda, Ralf, 58762 Altena (DE); Fortmann, Rainer, 29308 Winsen (Aller) Wolthausen (DE)
(74) Vertreter: Hoeger, Stellrecht & Partner Patentanwälte

(56) Entgegenhaltungen:
- US-A- 5 041 339
- US-A1- 2003 008 169
- DATABASE WPI Week 198114 Thomson Scientific, London, GB; AN 1981-24631D XP002634396, "Metal gasket for sealing diesel engine pre:burner - and cylinder head, comprises iron (alloy) core coated with copper-tin sintered alloy", -& JP 49 119808 A ((KOMS) KOMATSU KK) 15. November 1974 (1974-11-15)

## Beschreibung

Die Erfindung betrifft eine Flachdichtung in Gestalt einer Verbrennungsmotorabgasstrang-Dichtung, bei welcher sich eine Stahlblechlage vorzugsweise über die ganze Dichtungsplatte erstreckt. Eine solche als Zylinderkopfdichtung gestaltete Flachdichtung ist aus der JP 49-119 808 A bekannt. Bei dieser Flachdichtung ist die Blechlage mit einer auf Letztere aufgesinterten Cu-Sn-Legierung beschichtet, wobei die Beschichtung eine Dicke von 0,1 bis 0,5 mm und eine Porosität von 5 bis 20 % aufweist.

Insbesondere betrifft die Erfindung eine solche Flachdichtung für einen Einsatz bei verhältnismäßig hohen Temperaturen. Die Rede ist dabei von Flachdichtungen, welche im eingebauten Zustand unter Betriebsbedingungen Temperaturen von mehr als 200°C ausgesetzt sind, insbesondere von in den Abgasstrang eines Verbrennungsmotors einzubauenden Flachdichtungen, vorzugsweise also von einer zwischen einem Zylinderkopf und einem Abgaskrümmer einzubauenden Dichtung oder von einer gegen einen Flansch eines Turboladers anliegenden Dichtung.

Die Dichtungsplatte der von der Erfindung betroffenen Flachdichtungen kann ein- oder mehrlagig sein, d.h. eine oder mehrere Stahlblechlagen aufweisen, und in der Regel weist die eine Stahlblechlage oder eine oder mehrere Stahlblechlagen der Dichtungsplatte zur Abdichtung um eine Abgas-Durchgangsöffnung herum, ein Dichtelement bzw. Dichtelemente auf, wobei ein solches Dichtelement die Gestalt einer in die betreffende Stahlblechlage eingeprägten, höhen- bzw. dickenelastischen Sicke hat.

Der Vollständigkeit halber sei noch erwähnt, dass bei einer mehrlagigen Flachdichtung der eingangs definierten Art nicht nur die die beiden Hauptoberflächen der Dichtungsplatte bildenden Seiten der beiden äußeren Stahlblechlagen mit einer Beschichtung versehen sein können, sondern auch eine oder mehrere, im Inneren der Dichtungsplatte liegende Hauptoberflächen von Stahlblechlagen.

Bei einer Flachdichtung mit einer mindestens eine Stahlblechlage aufweisenden Dichtungsplatte dient eine Oberflächenbeschichtung der Stahlblechlage zumindest einem der beiden folgenden Zwecke: Abdichtung im Bereich von Oberflächenrauhigkeiten (worunter auch offene Poren und Lunker zu verstehen sind) einer Maschinenbauteil-Dichtfläche (sogenannte Mikroabdichtung), und Verminderung der Gleitreibung zwischen der Flachdichtung und einer Maschinenbauteil-Dichtfläche (die Gleitbewegungen werden durch unterschiedliche Wärmedehnungen der Dichtung und der Maschinenbauteile bei betriebsbedingten Temperaturänderungen, unter Umständen aber auch durch Druckänderungen der die Dichtung durchströmenden Brenngase hervorgerufen).

Bei einer solchen Flachdichtung sollte die Oberflächenbeschichtung also möglichst beständig gegenüber hohen Temperaturen sein und vorzugsweise auch noch dauerhaft zu einer möglichst geringen Gleitreibung zwischen der Dichtung und den Maschinenbauteil-Dichtflächen führen, zwischen denen die Dichtung im Betrieb eingespannt ist, da bei einer hohen Gleitreibung nicht nur die Oberflächenbeschichtung zerstört wird, sondern auch die Abdichtwirkung des Dichtelements oder der Dichtelemente beeinträchtigt werden kann, welches bzw. welche eine abzudichtende Fluid-Durchgangsöffnung der Flachdichtung umschließt bzw. umschließen.

Bei bekannten solchen Flachdichtungen besteht die Beschichtung meist aus einem Gemisch aus Bornitrid, Graphit und einem Bindemittel, wie z.B. einem verhältnismäßig temperaturbeständigen Harz. Die Haftung der Beschichtung auf der Stahlblechlage ist dabei eine rein physikalische und keine chemische, weshalb die Haftfestigkeit verhältnismäßig gering ist; im Betrieb führen deshalb Bewegungen der Maschinenbauteil-Dichtflächen und der Flachdichtung relativ zueinander zum Abreiben der Beschichtung von der Stahlblechlage mit der Folge einer Erhöhung der schädlichen Gleitreibung zwischen den Maschinenbauteil-Dichtflächen und der Flachdichtung. Außerdem wird bei einem Betrieb unter hohen Temperaturen und bei nicht völlig zu unterbindendem Kontakt mit Sauerstoff der Graphit, aber auch das Bindemittel durch Oxidation zerstört, so dass diese für die Mikroabdichtungsfunktion der Dichtung wesentlichen Bestandteile mindestens zum Teil verloren gehen. Ergänzend sei noch bemerkt, dass bei den geschilderten bekannten Flachdichtungen die Beschichtungen bis zu 80% Graphit enthalten, der durch Oxidation zerstört werden kann.

Der Erfindung lag die Aufgabe zugrunde, eine Flachdichtung der eingangs definierten Art mit einer hinsichtlich ihrer Eigenschaften beständigeren Oberflächenbeschichtung vorzuschlagen, und diese Aufgabe lässt sich erfindungsgemäß mit den Merkmalen des Kennzeichens des Anspruchs 1 lösen, wobei für die Oberflächenbeschichtung mindestens eine auf der Stahlblechlage gesinterte Bronzelegierung aus einer Kupfer-Zinn-Basislegierung verwendet wird. Für die Erzeugung der Bindeschicht und der Oberflächenbeschichtung werden vorzugsweise Bronzelegierungen aus Kupfer-Zinn-Basislegierungen mit unterschiedlichen Legierungsbestandteilen verwendet.

Die Bronzelegierung lässt sich in Pulverform aufbringen und dann sintern, wobei für das Aufbringen jeder aus der Pulvermetallurgie bekannte Prozess, wie z.B. das Aufstreuen, verwendet werden kann. Beim Sintern der mindestens einen Bronzelegierung ergibt sich eine chemische Bindung zwischen der Stahlblechlage und der Beschichtung und damit eine im Vergleich zum geschilderten Stand der Technik stark verbesserte Haft- und Abriebfestigkeit der Beschichtung. Außerdem haben Reibverschleißversuche bei höheren Temperaturen gezeigt, dass die Beschichtung zu einem geringeren und vor allem zeitlich konstanteren Reibungskoeffizienten zwischen der Flachdichtung und einer angrenzenden Fläche eines Bauteils führt, welches mit einem Maschinenbauteil der Art verglichen werden kann, gegen welches eine erfindungsgemäße Flachdichtung in Gestalt einer Verbrennungsmotorabgasstrang-Dichtung im Betrieb angepresst wird. Auch ändert sich die Mikroabdichtungsfähigkeit einer aufgesinterten Bronzelegierung auch unter den in Rede stehenden hohen Temperaturen zumindest nicht wesentlich.

Da sich eine in Pulverform aufgetragene und dann gesinterte Beschichtung in bekannter Weise so gestalten lässt, dass mindestens eine Oberflächenschicht der Beschichtung porös ist, enthält bei bevorzugten Ausführungsformen erfindungsgemäßer Flachdichtungen mindestens eine Oberflächenschicht der Oberflächenbeschichtung einen Gleitwerkstoff, bei dem es sich insbesondere um Graphit handelt. Dabei hat sich gezeigt, dass auch unter hohen Temperaturen von mehr als ca. 400°C oder sogar 500°C nur ein geringer Anteil des in den Poren der gesinterten Bronzelegierung enthaltenen Graphits durch Oxidation verloren geht, ganz abgesehen davon, dass eine Beschichtung für die Gewährleistung einer verhältnismäßig geringen Gleitreibung weit weniger Graphit enthalten muss als die vorstehend beschriebenen bekannten Beschichtungen. Da infolgedessen im Betrieb solcher erfindungsgemäßen Flachdichtungen in Gestalt einer Verbrennungsmotorabgasstrang-Dichtung die Beschichtung weit weniger Materialverlust erleidet als die geschilderte bekannte graphithaltige Beschichtung, wird im Betrieb das Mikroabdichtungsvermögen erfindungsgemäßer Flachdichtungen auch weit weniger beeinträchtigt als bei Flachdichtungen mit der geschilderten bekannten graphithaltigen Beschichtung.

Schließlich kann eine Beschichtung aus einer gesinterten Bronzelegierung im Betrieb erfindungsgemäßer Flachdichtungen in Gestalt einer Verbrennungsmotorabgasstrang-Dichtung aufgrund von Oxidationsprozessen der Bronzelegierung eine Volumenzunahme erfahren, aufgrund welcher der durch eine Flachdichtung abzudichtende, von den Maschinenbauteil-Dichtflächen begrenzte Dichtspalt durch eine erfindungsgemäße Flachdichtung noch besser abgedichtet wird.

Der bei bevorzugten Ausführungsformen erfindungsgemäßer Flachdichtungen die Gleiteigenschaften der gesinterten Bronzelegierung verbessernde Graphit ist bei bevorzugten Ausführungsformen erfindungsgemäßer Flachdichtungen mindestens in einer Oberflächenschicht der gesinterten Bronzelegierung in einer Menge von 4 bis 8 Gew%, bevorzugt von 5 bis 7 Gew% und insbesondere von ungefähr 6 Gew% enthalten. Durch einen solchen, im Vergleich zu der geschilderten bekannten graphithaltigen Beschichtung signifikant kleineren Graphitanteil lassen sich dennoch gute Gleiteigenschaften der erfindungsgemäßen Beschichtung erzielen und gegebenenfalls auch die durch Oxidation im Betrieb auftretenden Materialverluste der Beschichtung gravierend vermindern.

Die vorgesehene Bindeschicht wird vorzugsweise gleichfalls aus einer Bronzelegierung aus einer Kupfer-Zinn-Basislegierung gebildet und insbesondere auf die Stahlblechlage aufgesintert.

Durch die intermetallische Phase wird die Haftfestigkeit der die obere Schicht bildenden Oberflächenbeschichtung signifikant verbessert, nämlich durch Verbesserung der chemischen Haftung der Schichten aneinander und der Bindeschicht an der Stahlblechlage. Eine optimale Haftfestigkeit wird durch eine Bindeschicht erreicht, die, wie erwähnt, gleichfalls aus einer Bronzelegierung aus einer Kupfer-Zinn-Basislegierung gebildet wird.

Die Bindeschicht kann in jedem bekannten Prozess auf die Stahlblechlage aufgebracht werden, bevorzugt handelt es sich bei der Bindeschicht jedoch um eine auf die Stahlblechlage aufgesinterte und vor dem Sintern pulverförmige Schicht. Diese kann als solche in einem ersten Schritt auf die Stahlblechlage aufgesintert werden, einfacher herzustellen sind jedoch Ausführungsformen, bei denen die Bindeschicht und die Oberflächenbeschichtung eine gemeinsam auf die Stahlblechlage aufgesinterte Beschichtung bilden.

Wie sich aus dem Vorstehenden ergibt, eignet sich die Erfindung für Flachdichtungen in Gestalt einer Verbrennungsmotorabgasstrang-Dichtung der eingangs definierten Art, bei denen die beschichtete Stahlblechlage mit mindestens einer mit der Bronzelegierung beschichteten Abdichtsicke versehen ist, welche eine Abgas-Durchgangsöffnung der Stahlblechlage umschließt.

Das vorstehend bereits indirekt beschriebene erfindungsgemäße Verfahren zur Herstellung erfindungsgemäßer Flachdichtungen sieht im Besonderen noch einen Schritt vor, durch den die Beschichtung verdichtet und/oder in ihrer Dicke kalibriert wird und der darin besteht, dass die beschichtete Stahlblechlage nach dem Sintervorgang mindestens einem Pressvorgang unterzogen wird.

Bei bevorzugten Ausführungsformen der erfindungsgemäßen Flachdichtung beträgt die Gesamtdicke der Beschichtung, also der Oberflächenbeschichtung samt Bindeschicht, mehrere hundert µm; insbesondere liegt die Schichtdicke zwischen 150 und 350 µm, bevorzugt zwischen 250 und 300 µm.

Die Kupfer-Zinn-Basislegierung kann zur Verbesserung ihrer mechanischen und chemischen Eigenschaften noch einen kleinen Siliziumanteil (z.B. 1 bis 2 Gew%) und/oder zur Verbesserung der mechanischen Festigkeit einen kleinen Phosphoranteil (z.B. 0,5 Gew%) enthalten.

Im Folgenden soll die Erfindung anhand der beigefügten Zeichnung noch weiter erläutert werden; in der Zeichnung zeigen:
- Figur 1: eine Draufsicht auf eine nur beispielhaft als Flanschdichtung gestaltete erfindungsgemäße Flachdichtung in Gestalt einer Verbrennungsmotorabgasstrang-Dichtung;
- Figur 2: einen Schnitt nach der Linie 2-2 in Figur 1 und
- Figur 2A: den in Figur 2 mit "A" gekennzeichneten Ausschnitt in größerem Maßstab.

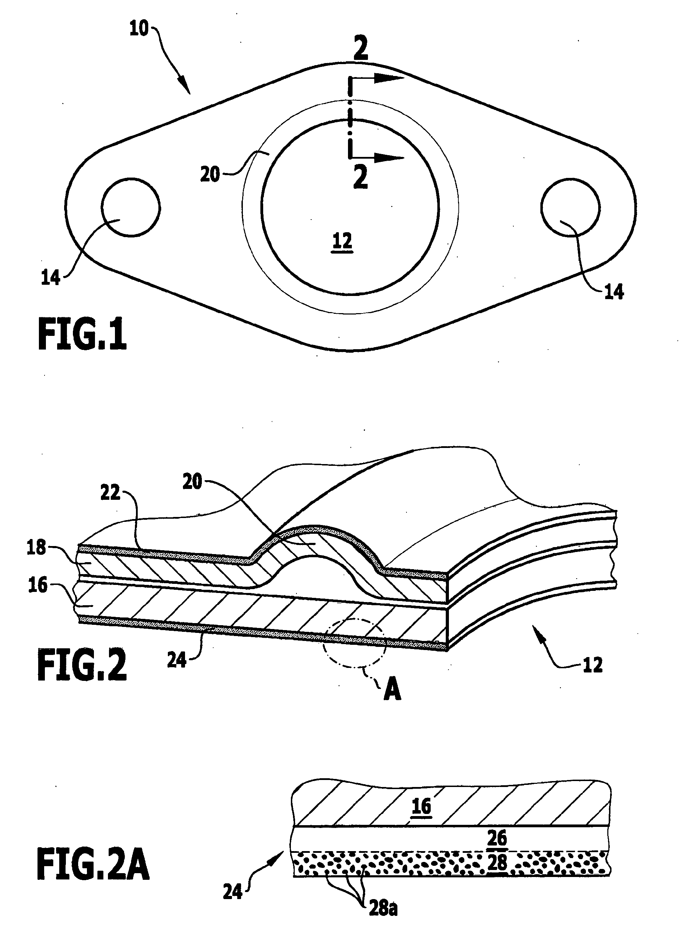

Die in Figur 1 gezeigte Flachdichtung hat eine Dichtungsplatte 10 mit einer Abgas-Durchgangsöffnung 12, um welche herum abgedichtet werden muss, und zwei Schraubenlöchern 14 für den Durchtritt von Montageschrauben, mit deren Hilfe die Flachdichtung zwischen Dichtflächen von nicht dargestellten Maschinenbauteilen eingespannt werden kann.

Wie die Figur 2 zeigt, besitzt die Dichtungsplatte 10 zwei aufeinander liegende Stahlblechlagen 16 und 18 aus vorzugsweise korrosionsbeständigen Stahlblechen. In die Stahlblechlage 18 ist eine Abdichtsicke 20 eingeprägt, welche die Durchgangsöffnung 12 umschließt und um diese herum mit ihrem gegen eine Maschinenbauteil-Dichtfläche anzupressenden Kamm sowie mit ihren beiden gegen die Stahlblechlage 16 anzupressenden sogenannten Sickenfüßen abdichtet - unter den Sickenfüßen werden die beiden gemäß Figur 2 unteren Endbereich der Abdichtsicke 20 verstanden. Damit die Abdichtsicke 20 beim Einbau und im Betrieb der Flachdichtung ihre Höhe federelastisch ändern kann, wird für die Stahlblechlage 18 ein Federstahlblech verwendet, während für die Stahlblechlage 16, wenn sie insgesamt eben ist, ein Stahlblech ohne federelastische Eigenschaften verwendet werden kann.

Erfindungsgemäß könnten nun die Ober- und Unterseiten beider Stahlblechlagen 16 und 18 mit Beschichtungen versehen sein, die sich über die gesamte Fläche der jeweiligen Stahlblechlagenseite, gegebenenfalls aber auch nur über die für die Abdichtfunktion der Dichtung kritischen Flächenbereiche erstrecken können.

Bei der zeichnerisch dargestellten Flachdichtung sind aber nur die Oberseite der Stahlblechlage 18 und die Unterseite der Stahlblechlage 16, d.h. die beiden Hauptoberflächen der Dichtungsplatte 10, mit Beschichtungen 22 und 24 versehen.

Bei bevorzugten Ausführungsformen einer erfindungsgemäßen Flachdichtung sind alle diese Beschichtungen von gleichem Aufbau und gleicher Struktur, weshalb anhand der Figur 2A nur der Aufbau und die Struktur der Beschichtung 24 erläutert werden soll.

Die Beschichtung 24 setzt sich aus einer der Stahlblechlage 16 zugewandten Bindeschicht 26 und einer Oberflächenbeschichtung 28 zusammen, welche Grenzflächen-frei in die Bindeschicht 26 übergeht. Die Bindeschicht 26, welche gleichfalls Grenzflächen-frei in die Stahlblechlage 16 übergeht, besteht aus einer vorzugsweise porenfreien Bronzelegierung aus einer Kupfer-Zinn-Basislegierung, während die Oberflächenbeschichtung 28 aus einer porösen Bronzelegierung aus einer Kupfer-Zinn-Basislegierung und in die Poren eingelagerten Graphit-Partikeln 28a besteht. Die für die Bindeschicht 26 und die Oberflächenbeschichtung 28 verwendeten Bronzelegierungen können identisch, hinsichtlich ihrer Legierungsbestandteile aber auch unterschiedlich sein.

Zur Herstellung der Beschichtung 24 (gleiches gilt für die Beschichtung 22) wird so vorgegangen, dass auf die zu beschichtende Seite der Stahlblechlage 16 (bzw. der Stahlblechlage 18) zunächst eine Schicht der für die Bindeschicht 26 verwendeten Bronzelegierung in Pulverform und auf diese Schicht dann eine pulverförmige Schicht aus einem Material aufgestreut wird, bei dem es sich um ein Gemisch aus der für die Oberflächenbeschichtung 28 verwendeten Bronzelegierung und Graphitpartikeln handelt. Sodann werden die beiden Pulverschichten gesintert und auf die Stahlblechlage 16 aufgesintert; dabei bildet die Bindeschicht 26 mit dem Material der Stahlblechlage 16 eine intermetallische Phase, die Bindeschicht 26 wird an die Stahlblechlage 16 und die Oberflächenbeschichtung 28 wird an die Bindeschicht 26 chemisch gebunden. Beim Sintern bildet die für die Oberflächenbeschichtung 28 verwendete Bronzelegierung eine Matrix, in die die Graphitpartikel 28a eingebunden sind.

Nach dem Sinterprozess wird die beschichtete Stahlblechlage 16 vorzugsweise einem oder mehreren Pressvorgängen unterworfen, um die Beschichtung 24 zu verdichten und/oder in ihrer Dicke zu vergleichmäßigen und zu kalibrieren.

Versuche haben gezeigt, dass selbst dann, wenn die mit der Beschichtung 22 überzogene Abdichtsicke 20 mit ihrem Kamm gegen eine Maschinenbauteil-Dichtfläche anliegt, es auch im Betrieb nicht zu einem vollständigen Abrieb der Beschichtung kommt, wenn die Beschichtung eine hinreichende Dicke aufweist, so dass die für die Abdichtfunktion wichtige Abdichtsicke 20 vor einem schädlichen Verschleiß geschützt bleibt.

Ein weiterer Vorteil der Beschichtung ist darin zu sehen, dass die hohe Porosität der der Oberflächenbeschichtung 28 entsprechenden Oberflächenbeschichtung der Beschichtung 22 infolge der bei eingebauter Flachdichtung auf den Kamm der Abdichtsicke 20 einwirkenden hohen Pressungskräfte reduziert und dadurch die Beschichtung 22 im Bereich des Kamms der Abdichtsicke 20 komprimiert wird. Dieser Effekt tritt aber gegebenenfalls auch an allen anderen, bei eingebauter Flachdichtung hohen Druckbelastungen unterworfenen Stellen der Dichtung auf.

Mit der Beschichtung lässt sich also die Funktion einer Flachdichtung in Gestalt einer Verbrennungsmotorabgasstrang-Dichtung auch bei hohen,Verschleißbelastungen gewährleisten, insbesondere aber die Abdichtwirkung einer die Dichtungsfunktion bestimmenden Abdichtsicke, da die Abdichtsicke selbst keinem Verschleiß unterliegt.

Durch die Erfindung wird also ein direkter metallischer Kontakt zwischen der eingebauten Dichtung in Gestalt einer Verbrennungsmotorabgasstrang-Dichtung und den Maschinenbauteil-Dichtflächen dauerhaft verhindert, und durch die guten Gleiteigenschaften der freien Oberfläche der Beschichtung wird auch verhindert, dass im Betrieb eine beschichtete Abdichtsicke für deren Standfestigkeit und Funktion schädlichen Querbelastungen unterworfen wird.

## Patentansprüche

1. Flachdichtung in Gestalt einer Verbrennungsmotorabgasstrang-Dichtung mit einer zwischen Dichtflächen von Abgasstrang-Bauteilen einzuspannenden Dichtungsplatte (10) mit mindestens einer zwei Hauptoberflächen aufweisenden Stahlblechlage (16, 18), die auf mindestens einer gegen eine Bauteil-Dichtfläche anzulegenden Hauptoberfläche mit einer Mikroabdichtungs- und Gleiteigenschaften besitzenden Oberflächenbeschichtung (28) aus einer auf der Stahlblechlage gesinterten Bronzelegierung aus einer Kupfer-Zinn-Basislegierung versehen ist, wobei sich zwischen der Stahlblechlage (16, 18) und der Oberflächenbeschichtung (28) eine von einer intermetallischen Phase gebildete Bindeschicht (26) befindet, die Stahlblechlage (18) eine Abgas-Durchgangsöffnung (12) sowie eine diese umschließende Abdichtsicke (20) mit einem Kamm aufweist und die Abdichtsicke samt Kamm mit der Oberflächenbeschichtung überzogen ist.

2. Flachdichtung nach Anspruch 1, **dadurch gekennzeichnet, dass** die intermetallische Phase von der Bindeschicht (26) mit dem Material der Stahlblechlage (18) gebildet wird.

3. Flachdichtung nach Anspruch 1 oder 2, **dadurch gekennzeichnet, dass** die Bindeschicht (26) eine auf die Stahlblechlage (18) aufgesinterte Schicht ist,

4. Flachdichtung nach einem der Ansprüche 1 bis 3, **dadurch gekennzeichnet, dass** die Bindeschicht (26) zumindest im Wesentlichen porenfrei ist.

5. Flachdichtung nach einem der Ansprüche 1 bis 4, **dadurch gekennzeichnet, dass** die Bindeschicht (26) und die Oberflächenbeschichtung (28) eine gemeinsam auf die Stahlblechlage (18) aufgesinterte Beschichtung bilden.

6. Flachdichtung nach einem der Ansprüche 1 bis 5, **dadurch gekennzeichnet, dass** mindestens eine Oberflächenschicht der Oberflächenbeschichtung (28) einen Gleitwerkstoff (28a) enthält.

7. Flachdichtung nach Anspruch 6, **dadurch gekennzeichnet, dass** mindestens die Oberflächenschicht der Oberflächenbeschichtung (28) als Gleitwerkstoff (28a) 4 bis 8 Gew% Graphit enthält.

8. Flachdichtung nach Anspruch 7, **dadurch gekennzeichnet, dass** die Bronzelegierung in der Oberflächenschicht 5 bis 7 Gew% und insbesondere ungefähr 6 Gew% Graphit enthält.

9. Flachdichtung nach einem der Ansprüche 6 bis 8, **dadurch gekennzeichnet, dass** die Oberflächenschicht der Oberflächenbeschichtung (28) porös ist und dass mindestens ein Teil der Poren den Gleitwerkstoff (28a) enthält.

10. Flachdichtung nach einem de Ansprüche 1 bis 9, **dadurch gekennzeichnet, dass** die Flachdichtung eine Abgaskrümmerdichtung ist.

11. Verfahren zur Herstellung einer Flachdichtung nach einem der Ansprüche 1 bis 10, **dadurch gekennzeichnet, dass** zur Bildung der Oberflächenbeschichtung (28) eine erste Bronzelegierung in Pulverform aufgebracht und dann gesintert wird.

12. Verfahren nach Anspruch 11, **dadurch gekennzeichnet, dass** zur Bildung der Bindeschicht (26) eine zweite Bronzelegierung in Pulverform aufgebracht und dann gesintert wird.

13. Verfahren nach Anspruch 12, **dadurch gekennzeichnet, dass** die beiden Bronzelegierungen gleichzeitig gesintert werden.

14. Verfahren nach einem der Ansprüche 11 bis 13, **dadurch gekennzeichnet, dass** die beschichtete Stahlblechlage (18) nach dem Sintervorgang mindestens einem Pressvorgang unterzogen und **dadurch** das gesinterte Material verdichtet wird.

## Claims

1. Flat gasket in the form of a combustion engine exhaust line gasket comprising a gasket plate (10) that is to be clamped between sealing faces of exhaust line components, said gasket plate (10) comprising at least one sheet steel layer (16, 18) having two major surfaces and being, on at least one major surface thereof that is to be brought into contact against a component sealing face, provided with a surface coating (28) which possesses microsealing and sliding properties and is made from a bronze alloy of a copper-tin base alloy, sintered on the sheet steel layer, wherein a bonding layer (26) formed of an intermetallic phase is located between the sheet steel layer (16, 18) and the surface coating (28), the sheet steel layer (18) has an exhaust through-opening (12) and a sealing bead (20) enclosing the latter, said sealing bead (20) having a crest, and wherein the sealing bead including the crest is coated with the surface coating.

2. Flat gasket in accordance with claim 1, **characterized in that** the intermetallic phase of the bonding layer (26) is formed with the material of the sheet steel layer (18).

3. Flat gasket in accordance with claim 1 or 2, **characterized in that** the bonding layer (26) is a layer that is sintered on the sheet steel layer (18).

4. Flat gasket in accordance with any one of claims 1 to 3, **characterized in that** the bonding layer (26) is at least substantially free from pores.

5. Flat gasket in accordance with any one of claims 1 to 4, **characterized in that** the bonding layer (26) and the surface coating (28) form a coating that is jointly sintered on the sheet steel layer (18).

6. Flat gasket in accordance with any one of claims 1 to 5, **characterized in that** at least a surface layer of the surface coating (28) contains a sliding material (28a).

7. Flat gasket in accordance with claim 6, **characterized in that** at least the surface layer of the surface coating (28) contains, as the sliding material (28a), 4 to 8 wt% graphite.

8. Flat gasket in accordance with claim 7, **characterized in that** the bronze alloy in the surface layer contains 5 to 7 wt%, in particular about 6 wt%, graphite.

9. Flat gasket in accordance with any one of claims 6 to 8, **characterized in that** the surface layer of the surface coating (28) is porous and that at least part of the pores contain the sliding material (28a).

10. Flat gasket in accordance with any one of claims 6 to 9, **characterized in that** the flat gasket is an exhaust manifold gasket.

11. Method for manufacturing a flat gasket in accordance with any one of claims 1 to 10, **characterized in that** for forming the surface coating (28), a first bronze alloy is applied in the form of a powder and then sintered.

12. Method in accordance with claim 11, **characterized in that** for forming the bonding layer (26), a second bronze alloy is applied in the form of a powder and then sintered.

13. Method in accordance with claim 12, **characterized in that** the two bronze alloys are sintered jointly.

14. Method in accordance with any one of claims 11 to 13, **characterized in that** the coated sheet steel layer (18) after sintering is subjected to at least one pressing operation, thereby compacting the sintered material.

## Revendications

1. Joint plat sous la forme d'un joint pour la ligne d'échappement d'un moteur à combustion interne, comportant une plaque de joint (10) à serrer entre des surfaces d'étanchéité de composants de la ligne d'échappement avec au moins une couche de tôle d'acier (16, 18) présentant deux surfaces principales, ladite couche étant pourvue, sur au moins une surface principale à appliquer contre une surface d'étanchéité de composant, d'un revêtement de surface (28) présentant des propriétés de micro-étanchéification et de glissement, formé d'un alliage de bronze constitué à partir d'un alliage de base cuivre-étain fritté sur la couche de tôle d'acier, une couche de liaison (26) formée par une phase inter-métallique se trouvant entre la couche de tôle d'acier (16, 18) et le revêtement de surface (28), la couche de tôle d'acier (18) présentant une ouverture de passage (12) des gaz d'échappement ainsi qu'une moulure d'étanchéité (20) avec un peigne entourant celle-ci, et la moulure d'étanchéité et le peigne étant revêtus du revêtement de surface.

2. Joint plat selon la revendication 1, **caractérisé en ce que** la phase inter-métallique est formée par la couche de liaison (26) avec le matériau de la couche de tôle d'acier (18).

3. Joint plat selon la revendication 1 ou 2, **caractérisé en ce que** la couche de liaison (26) est une couche frittée sur la couche de tôle d'acier (18).

4. Joint plat selon l'une des revendications 1 à 3, **caractérisé en ce que** la couche de liaison (26) est au moins pratiquement exempte de pores.

5. Joint plat selon l'une des revendications 1 à 4, **caractérisé en ce que** la couche de liaison (26) et le revêtement de surface (28) forment un revêtement fritté simultanément sur la couche de tôle d'acier (18).

6. Joint plat selon l'une des revendications 1 à 5, **caractérisé en ce qu'**au moins une couche de surface du revêtement de surface (28) contient un matériau de glissement (28a).

7. Joint plat selon la revendication 6, **caractérisé en ce qu'**au moins la couche de surface du revêtement de surface (28) contient entre 4 et 8 % en poids de graphite en tant que matériau de glissement (28a).

8. Joint plat selon la revendication 7, **caractérisé en ce que** l'alliage de bronze dans la couche de surface contient entre 5 et 7 % en poids et notamment environ 6 % en poids de graphite.

9. Joint plat selon l'une des revendications 6 à 8, **caractérisé en ce que** la couche de surface du revêtement de surface (28) est poreuse, et **en ce qu'**au moins une partie des pores contient le matériau de glissement (28a).

10. Joint plat selon l'une des revendications 1 à 9, **caractérisé en ce que** ledit joint plat est un joint pour collecteur d'échappement.

11. Procédé de fabrication d'un joint plat selon l'une des revendications 1 à 10, **caractérisé en ce qu'**un premier alliage de bronze est appliqué sous forme de poudre avant d'être fritté pour former le revêtement de surface (28).

12. Procédé selon la revendication 11, **caractérisé en ce qu'**un deuxième alliage de bronze est appliqué sous forme de poudre avant d'être fritté pour former la couche de liaison (26).

13. Procédé selon la revendication 12, **caractérisé en ce que** les deux alliages de bronze sous frittés simultanément.

14. Procédé selon l'une des revendications 11 à 13, **caractérisé en ce que** la couche de tôle d'acier (18) revêtue est soumise à au moins un processus de compression après frittage et **en ce que** le matériau fritté est ainsi compacté.
